# EUROPEAN PATENT SPECIFICATION

(11) **EP 4 372 047 B1**
(45) Date of publication and mention of the grant of the patent: **04.12.2024**
(21) Application number: 23209524.0
(22) Date of filing: 13.11.2023
(51) Int. Cl.: C08L 23/12, C08L 53/00

(54) **POLYPROPYLENE RESIN COMPOSITION WITH EXCELLENT LOW-TEMPERATURE IMPACT RESISTANCE AND ARTICLE MOLDED THEREFROM**
POLYPROPYLENHARZZUSAMMENSETZUNG MIT HERVORRAGENDER TIEFTEMPERATURSCHLAGZÄHIGKEIT UND DARAUS GEFORMTER ARTIKEL
COMPOSITION DE RÉSINE DE POLYPROPYLÈNE PRÉSENTANT UNE EXCELLENTE RÉSISTANCE AUX CHOCS À BASSE TEMPÉRATURE ET ARTICLE MOULÉ À PARTIR DE CELLE-CI

(30) Priority: 16.11.2022 KR 20220153151
(43) Date of publication of application: 22.05.2024
(73) Proprietor: Hanwha TotalEnergies Petrochemical Co., Ltd., Seosan-si, Chungcheongnam-do 31900 (KR)
(72) Inventor: KIM, SungHyun, 31900 Chungcheongnam-do (KR); CHUN, YongSung;, 31900 Chungcheongnam-do (KR); PARK, Daeho, 31900 Chungcheongnam-do (KR)
(74) Representative: HGF

(56) References cited:
- EP-A1- 3 985 065
- WO-A1-2011/012500
- KR-B1- 101 934 652

## Description

### Technical Field

The present invention relates to a polypropylene resin composition with excellent impact resistance and rigidity and to an article molded therefrom. Specifically, the present invention relates to a polypropylene resin composition that comprises a propylene-ethylene block copolymer resin as a main component and has excellent impact resistance at low temperatures and room temperature and excellent rigidity and to a molded article prepared therefrom.

### Background Art of the Invention

A polypropylene resin, which is one of the general-purpose resins, is not only inexpensive but also excellent in mechanical properties, moldability, and chemical resistance. Thus, it is widely used as a material for automobile interior and exterior parts, electronic and household appliance parts, construction and industrial supplies, films, pipes, power cables, and the like.

A propylene-ethylene block copolymer, which is a type of polypropylene, is a polymer in which a propylene-ethylene rubber copolymer is dispersed in a propylene homopolymer. It is a resin that reinforces the impact resistance of a propylene homopolymer.

In particular, when the content of a propylene-ethylene rubber copolymer in a propylene-ethylene block copolymer is 25% by weight or more, it is known to have very good impact resistance such that the Izod impact strength is 60 kgf·cm/cm or more when measured at 23°C, and the Izod specimen is not completely fractured even after the impact test. Such a high-impact resistant polypropylene resin produced in a reactor is called a reactor-made-thermoplastic olefin (R-TPO). While R-TPO has excellent impact resistance at room temperature (23°C), it has low impact resistance at low temperatures (e.g., 0°C); thus, there is a limit to its application that requires high impact resistance at low temperatures.

### Prior Art Documents

### Patent Documents

Patent Document 1: Korean Laid-open Patent Publication No. 10-2022-0048936
Patent Document 2: Korean Laid-open Patent Publication No. 10-2020-0062559
Patent Document 3: WO2011/012500 A1

### Disclosure of the Invention

### Technical Problem to Solve

Accordingly, an object of the present invention is to provide a polypropylene resin composition having excellent impact resistance at low temperatures and room temperature and excellent rigidity.

Another object of the present invention is to provide an article molded from the polypropylene resin composition, which has excellent impact resistance at low temperatures and room temperature and excellent rigidity.

### Solution to the Problem

According to an embodiment of the present invention for accomplishing the above object, there is provided a polypropylene resin composition, which comprises, based on the total weight of components (A) and (B), (A) 85 to 97% by weight of a propylene-ethylene block copolymer obtained by the polymerization of a propylene homopolymer with a propylene-ethylene rubber copolymer in stages in reactors; and (B) 3 to 15% by weight of a polyethylene, wherein, when the propylene-ethylene block copolymer (A) is extracted with a xylene solvent at room temperature, the content of the propylene-ethylene rubber copolymer measured as the amount of a solvent extract (or xylene soluble) is 25 to 40% by weight, the content of ethylene in the xylene soluble is 35 to 45% by weight, and the content of ethylene in the propylene-ethylene block copolymer (A) is 9 to 20% by weight.

In a specific embodiment of the present invention, the propylene-ethylene block copolymer (A) may have a melt index of 5 to 40 g/10 minutes when measured at 230°C under a load of 2.16 kg.

In a specific embodiment of the present invention, the polypropylene resin composition may further comprise at least one additive selected from the group consisting of an antioxidant, a neutralizer, a slip agent, an anti-blocking agent, a reinforcing agent, a filler, a weathering stabilizer, an antistatic agent, a lubricant, a nucleating agent, a flame retardant, a pigment, and a dye.

In a specific embodiment of the present invention, the polypropylene resin composition may comprise at least one antioxidant selected from the group consisting of pentaerythritol tetrakis(3 -(3,5 -di-t-butyl-4-hydroxyphenyl)propionate), 1,3,5-trimethyl-2,4,6-tris(3,5-di-t-butyl-4-hydroxybenzyl)benzene, and tris(2,4-di-t-butylphenyl)phosphite in an amount of 0.05 to 0.3 part by weight relative to 100 parts by weight of the composition.

In a specific embodiment of the present invention, the polypropylene resin composition may comprise at least one neutralizer selected from the group consisting of hydrotalcite and calcium stearate in an amount of 0.05 to 0.3 part by weight relative to 100 parts by weight of the composition.

In a specific embodiment of the present invention, the polypropylene resin composition may have a melt index of 5 to 40 g/10 minutes when measured at 230°C under a load of 2.16 kg.

According to another embodiment of the present invention, there is provided a polypropylene resin article molded from the polypropylene resin composition.

In a specific embodiment of the present invention, the polypropylene resin article may be prepared by injection-molding the polypropylene resin composition.

In a specific embodiment of the present invention, the polypropylene resin article may have an Izod impact strength of 60 kgf·cm/cm or more when measured at 23°C and an Izod impact strength of 60 kgf·cm/cm or more when measured at 0°C.

In a specific embodiment of the present invention, the polypropylene resin article may have a flexural modulus of 8,000 kgf/cm² or more and an elongation at break of 200% or more.

The polypropylene resin article according to an embodiment of the present invention may be an automobile interior or exterior part, a toy for children, or a food storage container.

### Effects of the Invention

Since a polypropylene resin article prepared from the polypropylene resin composition according to an embodiment of the present invention has excellent low-temperature impact resistance and rigidity, it can be advantageously used as an automobile interior or exterior part, a toy for children, or a food storage container.

### Detailed Description for Carrying out the Invention

Hereinafter, the present invention will be described in more detail.

According to an embodiment of the present invention, there is provided a polypropylene resin composition, which comprises, based on the total weight of components (A) and (B), (A) 85 to 97% by weight of a propylene-ethylene block copolymer obtained by the polymerization of a propylene homopolymer with a propylene-ethylene rubber copolymer in stages in reactors; and (B) 3 to 15% by weight of a polyethylene, wherein, when the propylene-ethylene block copolymer (A) is extracted with a xylene solvent at room temperature, the content of the propylene-ethylene rubber copolymer measured as the amount of a solvent extract (or xylene soluble) is 25 to 40% by weight, the content of ethylene in the xylene soluble is 35 to 45% by weight, and the content of ethylene in the propylene-ethylene block copolymer (A) is 9 to 20% by weight.

### (A) Propylene-ethylene block copolymer

The polypropylene resin composition according to an embodiment of the present invention comprises a propylene-ethylene block copolymer (A). Here, the propylene-ethylene block copolymer (A) may be a polymer obtained by the polymerization of a propylene homopolymer with a propylene-ethylene rubber copolymer in stages in reactors.

Specifically, when the propylene-ethylene block copolymer (A) is extracted with a xylene solvent at room temperature, the content of the propylene-ethylene rubber copolymer measured as the amount of a solvent extract (or xylene soluble) is 25 to 40% by weight. Preferably, when the propylene-ethylene block copolymer (A) is extracted with a xylene solvent at room temperature, the content of the propylene-ethylene rubber copolymer measured as the amount of a solvent extract (or xylene soluble) may be 26 to 38% by weight, more preferably, 30 to 35% by weight. If the content of the propylene-ethylene rubber copolymer is less than 25% by weight, the Izod impact strength of a resin article molded from the composition when measured at 23°C may be deteriorated. If the content of the propylene-ethylene rubber copolymer exceeds 40% by weight, there is a possibility that the Izod impact strength of a resin article molded from the composition may not be further improved while the flexural modulus thereof is deteriorated.

In addition, the content of ethylene in the xylene soluble of the propylene-ethylene block copolymer (A) is 35 to 45% by weight. Preferably, the content of ethylene in the xylene soluble of the propylene-ethylene block copolymer (A) may be 36 to 44% by weight, more preferably, 37 to 44% by weight. If the content of ethylene in the xylene soluble is less than 35% by weight or greater than 45% by weight, the Izod impact strength of a resin article molded from the composition when measured at 23°C may be deteriorated.

In addition, the content of ethylene in the propylene-ethylene block copolymer (A) is 9 to 20% by weight. Preferably, the content of ethylene in the propylene-ethylene block copolymer (A) may be 10 to 18% by weight, more preferably, 12 to 16% by weight. If the content of ethylene in the propylene-ethylene block copolymer (A) is less than 9% by weight, the Izod impact strength of a resin article molded from the composition when measured at 23°C may be deteriorated. If the content of ethylene in the propylene-ethylene block copolymer (A) exceeds 20% by weight, the compatibility between the propylene homopolymer and the propylene-ethylene rubber copolymer is low, which makes difficult the dispersion of the propylene-ethylene rubber copolymer in the propylene homopolymer matrix. As a result, there is a concern that the balance of rigidity and impact resistance of a resin article molded from the composition may be reduced.

In a specific embodiment of the present invention, the propylene-ethylene block copolymer (A) may have a melt index of 5 to 40 g/10 minutes when measured at 230°C under a load of 2.16 kg. Preferably, the melt index of the propylene-ethylene block copolymer (A) measured at 230°C under a load of 2.16 kg may be 10 to 30 g/10 minutes. If the melt index is less than 5 g/10 minutes, the flowability of the resin composition during injection may be decreased, thereby deteriorating processability. If the melt index exceeds 40 g/10 minute, there is a concern that the impact resistance of a resin article molded from the composition may not be sufficiently improved.

The polypropylene resin composition according to an embodiment of the present invention comprises 85 to 97% by weight of the propylene-ethylene block copolymer (A) based on the total weight of components (A) and (B). Preferably, the polypropylene resin composition may comprise 90 to 97% by weight of the propylene-ethylene block copolymer (A) based on the total weight of components (A) and (B). If the content of the propylene-ethylene block copolymer (A) is less than 85% by weight, the flexural modulus of a resin article molded from the composition may be deteriorated. On the other hand, if the content of the propylene-ethylene block copolymer (A) exceeds 97% by weight, the Izod impact strength of a resin article molded from the composition when measured at 0°C may be deteriorated.

There is no particular limitation to the method of preparing the propylene-ethylene block copolymer (A). Any method of preparing a propylene-ethylene block copolymer known in the art to which the present invention pertains may be used as it is or appropriately modified. For example, a bulk polymerization method, a solution polymerization method, a slurry polymerization method, a gas phase polymerization method, or the like may be used. Further, either a batch type or a continuous type is possible.

In addition, in order to increase the molecular weight distribution of the propylene-ethylene block copolymer (A), if necessary, several polymerization reactors for the polymerization of propylene-based polymers are arranged in series, and the polymerization may be carried out sequentially with the degree of polymerization in each polymerization reactor adjusted to be different.

Specifically, the propylene-ethylene block copolymer (A) may be prepared by a polymerization method known to those skilled in the art using a commercialized process such as LyondellBasell's Spherizone process, Mitsui's Hypol process, or Grace's Unipol process.

The Spherizone process may be a process in which one loop-type reactor called a multizone circulating reactor (MZCR) and one gas-phase reactor are connected in series to enable continuous polymerization. Specifically, propylene alone may be fed to the MZCR reactor to produce a propylene homopolymer. In the ensuing gas-phase reactor, propylene and ethylene may be fed to carry out the block-polymerization of a propylene-ethylene rubber component, thereby obtaining the propylene-ethylene block copolymer. The melt index of the resulting copolymer can be controlled by injecting hydrogen into each reactor.

The Hypol process may be a process in which two bulk or slurry reactors and two gas-phase reactors are connected in series to enable continuous polymerization. Specifically, propylene alone may be fed to the first- to third-stage reactors to produce a propylene homopolymer. In the ensuing fourth-stage reactor, propylene and ethylene may be fed to carry out the block-polymerization of a propylene-ethylene rubber component, thereby obtaining the propylene-ethylene block copolymer. The melt index of the resulting copolymer can be controlled by injecting hydrogen into each reactor.

In the Unipol process, two or more gas-phase reactors are connected in series, and polymerization can be continuously carried out. Specifically, in a process in which two gas-phase reactors are connected in series, propylene alone may be fed to the first-stage reactor to produce a propylene homopolymer. In the ensuing second-stage reactor, propylene and ethylene may be fed to carry out the block-polymerization of a propylene-ethylene rubber component, thereby obtaining the propylene-ethylene block copolymer. The melt index of the resulting copolymer can be controlled by injecting hydrogen into each reactor.

The propylene-ethylene block copolymer (A) may be polymerized in the presence of a Ziegler-Natta catalyst or a metallocene catalyst.

Specifically, a Ziegler-Natta catalyst may be prepared using a phthalate-based, succinate-based, or diether-based internal electron donor, two or more of which may be used in combination.

More specifically, dialkoxymagnesium may be reacted with a titanium compound and a phthalate-based, succinate-based, or diether-based internal electron donor in the presence of an organic solvent to prepare a catalyst for the polymerization of propylene. A propylene monomer may then be polymerized in the presence of this catalyst, along with a co-catalyst and an external electron donor, to produce a propylene-ethylene block copolymer (A).

For example, a catalyst system formed by selecting and combining the catalysts, alkylaluminum, and an appropriate external electron donor disclosed in Korean Laid-open Patent Publication Nos. 2006-0038101, 2006-0038102, and 2006-0038103 may be used. In particular, in order to maximize the balance between rigidity and impact resistance of the resin article of the present invention, it is preferable to use a catalyst capable of increasing the tacticity.

### (B) Polyethylene

The polypropylene resin composition according to an embodiment of the present invention comprises a polyethylene (B). Here, the polyethylene (B) may be a polymer obtained by the polymerization of an ethylene monomer substantially alone or by the copolymerization of a small amount of C₄₋₈ alpha-olefin with ethylene.

The type of the polyethylene (B) is not particularly limited. The polyethylene may comprise a low-density polyethylene (LDPE), a linear low-density polyethylene (LLDPE), or a high-density polyethylene (HDPE). Preferably, the polyethylene (B) may comprise a high-density polyethylene.

The polypropylene resin composition according to an embodiment of the present invention comprises 3 to 15% by weight of the polyethylene (B) based on the total weight of components (A) and (B).

Preferably, the polypropylene resin composition may comprise 3 to 10% by weight of the polyethylene (B) based on the total weight of components (A) and (B). If the content of the polyethylene (B) is less than 3% by weight, the Izod impact strength of a resin article molded from the composition when measured at 0°C may be deteriorated. On the other hand, if the content of the polyethylene (B) exceeds 15% by weight, the flexural modulus of a resin article molded from the composition may be deteriorated.

The polypropylene resin composition according to an embodiment of the present invention may further comprise conventional additives within a range that does not depart from the scope of the present invention. For example, the polypropylene resin composition may further comprise at least one additive selected from an antioxidant, a neutralizer, a slip agent, an anti-blocking agent, a reinforcing agent, a filler, a weathering stabilizer, an antistatic agent, a lubricant, a nucleating agent, a flame retardant, a pigment, and a dye, but it is not particularly limited thereto.

In a specific embodiment of the present invention, the polypropylene resin composition may further comprise an antioxidant to increase the thermal stability thereof. In such an event, the content of the antioxidant may be 0.05 to 0.3 part by weight, preferably 0.05 to 0.2 part by weight, relative to 100 parts by weight of the polypropylene resin composition. If the content of the antioxidant is less than 0.05 part by weight, it is difficult to secure long-term thermal stability. On the other hand, if the content of the antioxidant exceeds 0.3 part by weight, the thermal stability would not be further improved, and the economic efficiency of the product may be reduced, which is not preferable.

The antioxidant may be a phenolic antioxidant, a phosphite antioxidant, or the like. Specifically, it may comprise at least one antioxidant selected from the group consisting of pentaerythritol tetrakis(3 -(3,5 -di-t-butyl-4-hydroxyphenyl)propionate), 1,3,5-trimethyl-2,4,6-tris(3,5-di-t-butyl-4-hydroxybenzyl)benzene, and tris(2,4-di-t-butylphenyl)phosphite, but it is not particularly limited thereto.

In a specific embodiment of the present invention, the polypropylene resin composition may further comprise a neutralizer to remove the catalyst components remaining in the polypropylene resin composition. In such an event, the content of the neutralizer may be 0.05 to 0.3 part by weight, preferably 0.05 to 0.2 part by weight, relative to 100 parts by weight of the polypropylene resin composition. If the content of the neutralizer is less than 0.05 part by weight, it is difficult to sufficiently remove the residual catalyst components. On the other hand, if the content of the neutralizer exceeds 0.3 part by weight, the effect of removing the residual catalyst components would not be further improved, while the economic efficiency of the product may be reduced, which is not preferable.

The neutralizer may comprise at least one selected from the group consisting of hydrotalcite and calcium stearate, but it is not particularly limited thereto.

There is no particular limitation to the method of preparing the polypropylene resin composition according to an embodiment of the present invention. Any blending method known in the technical field of the present invention may be used as it is or appropriately modified.

As a specific example, the propylene-ethylene block copolymer resin, polyethylene resin, and additives described above are supplied to a mixer such as a kneader, a roll, and a Banbury mixer, or a single- or twin-screw extruder in predetermined amounts, and they are then blended with this apparatus, thereby preparing the polypropylene resin composition of the present invention.

The polypropylene resin composition according to an embodiment of the present invention may have a melt index of 5 to 40 g/10 min when measured at 230°C under a load of 2.16 kg. Preferably, the melt index of the polypropylene resin composition measured at 230°C under a load of 2.16 kg may be 10 to 30 g/10 minutes. If the melt index of the polypropylene resin composition is less than 5 g/10 minutes, there is a concern that the melt flowability of the resin composition is low, resulting in molding defects during the injection molding. If the melt index exceeds 40 g/10 minute, there is a concern that the impact resistance of a resin article molded from the composition may be low.

According to another embodiment of the present invention, there is provided a polypropylene resin article molded from the polypropylene resin composition.

There is no particular limitation to the method of preparing a molded article from the polypropylene resin composition according to an embodiment of the present invention. Any method known in the technical field of the present invention may be used. For example, the polypropylene resin composition according to an embodiment of the present invention may be molded by a conventional method such as injection molding, extrusion molding, casting molding, or the like to prepare a polypropylene resin article. Preferably, the polypropylene resin composition may be injection molded to prepare a polypropylene resin article.

In a specific embodiment of the present invention, the polypropylene resin article may have an Izod impact strength of 60 kgf·cm/cm or more when measured at 23°C and an Izod impact strength of 60 kgf·cm/cm or more when measured at 0°C.

In a specific embodiment of the present invention, the polypropylene resin article may have a flexural modulus of 8,000 kgf/cm² or more and an elongation at break of 200% or more.

Since the polypropylene resin article according to an embodiment of the present invention has excellent low-temperature impact resistance and rigidity, it can be advantageously used as an automobile interior or exterior part, a toy for children, or a food storage container.

In particular, since the polypropylene resin article according to an embodiment of the present invention has excellent impact resistance even at low temperatures, it is suitable for use as an automobile bumper. It may substitute a polyolefin-based thermoplastic elastomer in a polypropylene composite resin composition, thereby producing a cost-reduction effect.

### Example

Hereinafter, the present invention is explained in detail by the following examples. However, the following examples are intended to further illustrate the present invention. The scope of the present invention is not limited thereto only.

### Examples 1 and 2 and Comparative Examples 1 to 4

A propylene-ethylene block copolymer (A) was prepared using Grace's Consista C601 catalyst in Grace's Unipol process. Specifically, propylene was fed to the first-stage gas-phase reactor to prepare a propylene homopolymer matrix. Propylene and ethylene were copolymerized in the presence of the propylene homopolymer matrix in the subsequent second-stage gas-phase reactor to prepare a propylene-ethylene block copolymer (A). The composition of the propylene-ethylene block copolymer thus obtained is shown in Table 1.

The propylene-ethylene block copolymer resin of Table 1 was mixed with a polyethylene resin (B) (Hanwha TotalEnergies, HDPE C430A) in the composition shown in Table 2, followed by mixing and kneading with 500/500 ppm of antioxidants (Irganox 1010/Irgafos 168) and 400 ppm of a neutralizer (calcium stearate). Pellets of the polypropylene resin composition were prepared using a twin-screw kneading extruder (SM Platek, TEK-30, LID 36, 30-mm twin-screw extruder). Then, ASTM No. 4 injection specimens were prepared using a Woojin injection machine (SELEX-TE 150, 150 tons, screw diameter 36 mm). The physical properties were measured in the following manner and summarized in Table 3 below.

### (1) Melt index (g/10 minutes)

The melt index of polypropylene-based resins and compositions was measured at 230°C under a load of 2.16 kg according to ASTM D 1238.

### (2) Content (% by weight) of xylene solvent extract (xylene soluble)

It was measured in accordance with the ASTM D5492. Specifically, a polypropylene-based resin was dissolved in xylene at a concentration of 1% by weight at 140°C for 1 hour and left at room temperature (23°C) for 2 hours. The weight of the extract was then measured. The weight thus measured was expressed in percent based on the total weight of the polypropylene-based resin.

### (3) Ethylene content (% by weight)

It was measured by FT-IR in accordance with ASTM D3900.

### (4) Flexural modulus

The flexural modulus was measured at 23°C in accordance with ASTM D770.

### (5) Izod impact strength

The Izod impact strength was measured with a notched specimen having a thickness of 3.2 mm at 0°C and 23°C according to ASTM D256.

### (6) Elongation

It was measured at 23°C with UTM equipment in accordance with ASTM D638.

**[Table 1]**

| | A-1 | A-2 | A-3 | A-4 |
|---|---|---|---|---|
| Melt index (g/10 min.) | 20 | 18 | 21 | 19 |
| Content of xylene soluble (% by weight) | 31.3 | 33.8 | 24.0 | 33.0 |
| Content of ethylene (% by weight) in the xylene soluble component | 37.2 | 43.8 | 46.8 | 51.9 |
| Content of ethylene (% by weight) in the propylene-ethylene block copolymer | 12.7 | 13.8 | 11.2 | 17.8 |

**[Table 2]**

| | Ex. 1 | Ex. 2 | C. Ex. 1 | C. Ex. 2 | C. Ex. 3 | C. Ex. 4 |
|---|---|---|---|---|---|---|
| A-1 | 97 | - | 100 | - | - | - |
| A-2 | - | 90 | - | - | - | 80 |
| A-3 | - | - | - | 97 | - | - |
| A-4 | - | - | - | - | 97 | - |
| B | 3 | 10 | 0 | 3 | 3 | 20 |

**[Table 3]**

| | Ex. 1 | Ex. 2 | C. Ex. 1 | C. Ex. 2 | C. Ex. 3 | C. Ex. 4 |
|---|---|---|---|---|---|---|
| Melt index (g/10 min.) | 19 | 17 | 20 | 21 | 19 | 16 |
| Flexural modulus (kgf/cm²) | 8,500 | 8,400 | 8,700 | 9,900 | 9,200 | 7,900 |
| Izod impact strength (23°C, kgf·cm/cm) | 65 | 66 | 62 | 37 | 59 | 69 |
| Izod impact strength (0°C, kgf·cm/cm) | 65 | 62 | 19 | 12 | 19 | 65 |
| Elongation (%) | 208 | 305 | 124 | 45 | 26 | 55 |

As can be seen from Tables 1 to 3 above, in the polypropylene resin compositions according to Examples 1 and 2, falling within the scope of the present invention, the molded articles prepared therefrom had excellent flexural modulus, Izod impact resistance at 0°C and 23°C, and elongation.

In contrast, in the resin composition of Comparative Example 1, which did not comprise a polyethylene resin, the Izod impact strength at 0°C was deteriorated. In Comparative Example 2 in which the content of the propylene-ethylene rubber copolymer in the propylene-ethylene block copolymer was less than 25% by weight, both the impact strengths at 23°C and 0°C were deteriorated. In Comparative Example 3 in which the ethylene content in the xylene soluble exceeded 45% by weight, the impact strength at 0°C and elongation were deteriorated. In Comparative Example 4 in which the content of the polyethylene resin was 20% by weight, falling outside the range of the present invention, the rigidity and elongation were remarkably deteriorated although the Izod impact strength was improved.

Since the polypropylene resin composition according to an embodiment of the present invention has excellent impact resistance, rigidity, and elongation, an article molded therefrom can be advantageously used as an automobile interior or exterior part, a toy for children, or a food storage container.

## Claims

1. A polypropylene resin composition, which comprises, based on the total weight of components (A) and (B), (A) 85 to 97% by weight of a propylene-ethylene block copolymer obtained by the polymerization of a propylene homopolymer with a propylene-ethylene rubber copolymer in stages in reactors; and (B) 3 to 15% by weight of a polyethylene, wherein, when the propylene-ethylene block copolymer (A) is extracted with a xylene solvent at room temperature according to the method outlined in the description, the content of the propylene-ethylene rubber copolymer measured as the amount of a solvent extract (or xylene soluble) is 25 to 40% by weight, the content of ethylene in the xylene soluble measured by FT-IR in accordance with ASTM D3900 is 35 to 45% by weight, and the content of ethylene in the propylene-ethylene block copolymer (A) measured by FT-IR in accordance with ASTM D3900 is 9 to 20% by weight.

2. The polypropylene resin composition of claim 1, wherein the propylene-ethylene block copolymer (A) has a melt index of 5 to 40 g/10 minutes when measured at 230°C under a load of 2.16 kg according to ASTM D 1238.

3. The polypropylene resin composition of claim 1 or 2, which further comprises at least one additive selected from the group consisting of an antioxidant, a neutralizer, a slip agent, an anti-blocking agent, a reinforcing agent, a filler, a weathering stabilizer, an antistatic agent, a lubricant, a nucleating agent, a flame retardant, a pigment, and a dye.

4. The polypropylene resin composition of claim 3, which comprises at least one antioxidant selected from the group consisting of pentaerythritol tetrakis(3-(3,5-di-t-butyl-4-hydroxyphenyl) propionate), 1,3,5-trimethyl-2,4,6-tris(3,5-di-t-butyl-4-hydroxybenzyl)benzene, and tris(2,4-di-t-butylphenyl)phosphite in an amount of 0.05 to 0.3 part by weight relative to 100 parts by weight of the composition.

5. The polypropylene resin composition of claim 3 or 4, which further comprises at least one neutralizer selected from the group consisting of hydrotalcite and calcium stearate in an amount of 0.05 to 0.3 part by weight relative to 100 parts by weight of the composition.

6. A polypropylene resin article molded from the polypropylene resin composition of any one of claims 1 to 5.

7. The polypropylene resin article of claim 6, which is prepared by injection-molding the polypropylene resin composition.

8. The polypropylene resin article of claim 6 or 7, which has an Izod impact strength of 60 kgf·cm/cm or more when measured at 23°C with a notched specimen having a thickness of 3.2 mm according to ASTM D256 and an Izod impact strength of 60 kgf·cm/cm or more when measured at 0°C with a notched specimen having a thickness of 3.2 mm according to ASTM D256.

9. The polypropylene resin article of claim 6, 7 or 8, which has a flexural modulus of 8,000 kgf/cm² or more when measured at 23°C in accordance with ASTM D770 and an elongation at break of 200% or more when measured at 23°C with UTM equipment in accordance with ASTM D638.

10. The polypropylene resin article of any one of claims 6 to 9, which is an automobile interior or exterior part, a toy for children, or a food storage container.

## Patentansprüche

1. Polypropylenharzzusammensetzung, die, basierend auf dem Gesamtgewicht der Komponenten (A) und (B), (A) 85 bis 97 Gew.-% eines Propylen-Ethylen-Blockcopolymers, das durch die Polymerisation eines Propylenhomopolymers mit einem Propylen-Ethylen-Kautschuk-Copolymer in Stufen in Reaktoren erhalten wird; und (B) 3 bis 15 Gew.-% eines Polyethylens umfasst, wobei, wenn das Propylen-Ethylen-Blockcopolymer (A) mit einem Xylol-Lösungsmittel bei Raumtemperatur gemäß dem Verfahren dargelegt in der Beschreibung extrahiert wird, der Gehalt des Propylen-Ethylen-Kautschuk-Copolymers gemessen als die Menge eines Lösungsmittelextrakts (oder xylollöslichen Stoffes) 25 bis 40 Gew.-% ist, der Gehalt an Ethylen in dem xylollöslichen Stoff gemessen durch FT-IR gemäß ASTM D3900 35 bis 45 Gew.-% ist und der Gehalt an Ethylen in dem Propylen-Ethylen-Blockcopolymer (A) gemessen durch FT-IR gemäß ASTM D3900 9 bis 20 Gew.-% ist.

2. Polypropylenharzzusammensetzung nach Anspruch 1, wobei das Propylen-Ethylen-Blockcopolymer (A) einen Schmelzindex von 5 bis 40 g/10 Minuten wenn gemessen bei 230 °C unter einer Last von 2,16 kg gemäß ASTM D 1238 aufweist.

3. Polypropylenharzzusammensetzung nach Anspruch 1 oder 2, die ferner zumindest ein Additiv ausgewählt aus der Gruppe bestehend aus einem Antioxidans, einem Neutralisator, einem Gleitmittel, einem Antiblockiermittel, einem Verstärkungsmittel, einem Füller, einem Witterungsstabilisator, einem Antistatikmittel, einer Schmierung, einem Nukleierungsmittel, einem Flammenhemmer, einem Pigment und einem Farbstoff umfasst.

4. Polypropylenharzzusammensetzung nach Anspruch 3, die zumindest ein Antioxidans ausgewählt aus der Gruppe bestehend aus Pentaerythrittetrakis(3-(3,5-di-t-butyl-4-hydroxyphenyl)propionat), 1,3,5-Trimethyl-2,4,6-tris(3,5-di-t-butyl-4-hydroxybenzyl)benzol und Tris(2,4-di-t-butylphenyl)phosphit in einer Menge von 0,05 bis 0,3 Gewichtsteilen relativ zu 100 Gewichtsteilen der Zusammensetzung umfasst.

5. Polypropylenharzzusammensetzung nach Anspruch 3 oder 4, die ferner zumindest einen Neutralisator ausgewählt aus der Gruppe bestehend aus Hydrotalcit und Calciumstearat in einer Menge von 0,05 bis 0,3 Gewichtsteilen relativ zu 100 Gewichtsteilen der Zusammensetzung umfasst.

6. Polypropylenharzartikel geformt aus der Polypropylenharzzusammensetzung nach einem der Ansprüche 1 bis 5.

7. Polypropylenharzartikel nach Anspruch 6, der durch Spritzgießen der Polypropylenharzzusammensetzung hergestellt ist.

8. Polypropylenharzartikel nach Anspruch 6 oder 7, der eine Izod-Schlagfestigkeit von 60 kgf-cm/cm oder mehr wenn gemessen bei 23 °C mit einer gekerbten Probe mit einer Dicke von 3,2 mm gemäß ASTM D256 und eine Izod-Schlagfestigkeit von 60 kgf·cm/cm oder mehr wenn gemessen bei 0 °C mit einer gekerbten Probe mit einer Dicke von 3,2 mm gemäß ASTM D256 aufweist.

9. Polypropylenharzartikel nach Anspruch 6, 7 oder 8, der einen Biegemodul von 8.000 kgf/cm² oder mehr wenn gemessen bei 23 °C gemäß ASTM D770 und eine Bruchdehnung von 200 % oder mehr wenn gemessen bei 23 °C mit UTM-Ausrüstung gemäß ASTM D638 aufweist.

10. Polypropylenharzartikel nach einem der Ansprüche 6 bis 9, der ein Innen- oder Außenautoteil, ein Spielzeug für Kinder oder ein Lebensmittelaufbewahrungsbehälter ist.

## Revendications

1. Composition de résine de polypropylène qui comprend, sur la base du poids total des composants (A) et (B), (A) 85 à 97 % en poids d'un copolymère à blocs de propylène-éthylène obtenu par la polymérisation d'un homopolymère de propylène avec un copolymère de caoutchouc de propylène-éthylène par étapes dans des réacteurs ; et (B) 3 à 15 % en poids d'un polyéthylène, dans laquelle, lorsque le copolymère à blocs de propylène-éthylène (A) est extrait avec un solvant de xylène à température ambiante selon le procédé décrit dans la description, la teneur du copolymère de caoutchouc de propylène-éthylène mesurée en tant que quantité d'extrait de solvant (ou xylène soluble) est de 25 à 40 % en poids, la teneur en éthylène dans le xylène soluble mesurée par FT-IR conformément à la norme ASTM D3900 est de 35 à 45 % en poids, et la teneur en éthylène dans le copolymère à blocs de propylène-éthylène (A) mesurée par FT-IR conformément à la norme ASTM D3900 est de 9 à 20 % en poids.

2. Composition de résine de polypropylène selon la revendication 1, dans laquelle le copolymère à blocs de propylène-éthylène (A) comporte un indice de fusion de 5 à 40 g/10 minutes lorsqu'il est mesuré à 230° C sous une charge de 2,16 kg selon la norme ASTM D 1238.

3. Composition de résine de polypropylène selon la revendication 1 ou 2, qui comprend en outre au moins un additif choisi dans le groupe constitué par un antioxydant, un neutralisant, un agent glissant, un agent anti-bloquant, un agent de renforcement, une charge, un stabilisateur de résistance aux intempéries, un agent antistatique, un lubrifiant, un agent de nucléation, un retardateur de flamme, un pigment et un colorant.

4. Composition de résine de polypropylène selon la revendication 3, qui comprend au moins un antioxydant choisi dans le groupe constitué par le tétrakis(3-(3,5-di-t-butyl-4-hydroxyphényl)propionate) de pentaérythritol, 1,3,5-triméthyl-2,4,6-tris(3,5-di-t-butyl-4-hydroxybenzyl)benzène et tris(2,4-di-t-butylphényl)phosphite en une quantité de 0,05 à 0,3 partie en poids par rapport à 100 parties en poids de la composition.

5. Composition de résine de polypropylène selon la revendication 3 ou 4, qui comprend en outre au moins un neutralisant choisi dans le groupe constitué par l'hydrotalcite et le stéarate de calcium en une quantité de 0,05 à 0,3 partie en poids par rapport à 100 parties en poids de la composition.

6. Article en résine de polypropylène moulé à partir de la composition de résine de polypropylène selon l'une quelconque des revendications 1 à 5.

7. Article en résine de polypropylène selon la revendication 6, qui est préparé par moulage par injection de la composition de résine de polypropylène.

8. Article en résine de polypropylène selon la revendication 6 ou 7, qui comporte une résistance aux chocs Izod de 60 kgf·cm/cm ou plus lorsqu'elle est mesurée à 23°C avec un échantillon entaillé comportant une épaisseur de 3,2 mm selon la norme ASTM D256 et une résistance aux chocs Izod de 60 kgf-cm/cm ou plus lorsqu'elle est mesurée à 0° C avec un échantillon entaillé comportant une épaisseur de 3,2 mm selon la norme ASTM D256.

9. Article en résine de polypropylène selon la revendication 6, 7 ou 8, qui comporte un module de flexion de 8 000 kgf/cm² ou plus lorsqu'il est mesuré à 23° C conformément à la norme ASTM D770 et un allongement à la rupture de 200 % ou plus lorsqu'il est mesuré à 23° C avec un équipement UTM conformément à la norme ASTM D638.

10. Article en résine de polypropylène selon l'une quelconque des revendications 6 à 9, qui est une pièce intérieure ou extérieure d'automobile, un jouet pour enfants ou un récipient de stockage de nourriture.
